# EUROPEAN PATENT SPECIFICATION

(11) **EP 1 957 383 B1**
(45) Date of publication and mention of the grant of the patent: **20.04.2011**
(21) Application number: 06817688.2
(22) Date of filing: 05.12.2006
(51) Int. Cl.: B65G 1/04

(54) **RACK, CONVEYOR AND SHUTTLE AUTOMATED PICK SYSTEM**
AUTOMATISIERTES AUFNAHMESYSTEM MIT GESTELL, FÖRDERER UND PENDLER
SYSTEME DE DEPLACEMENT AUTOMATISE A ETAGERE, TAPIS DE TRANSPORT ET NAVETTE

(30) Priority: 08.12.2005 CA 2532116
(43) Date of publication of application: 20.08.2008
(73) Proprietor: Conestoga Cold Storage, Kitchener, Ontario N2E 1W9 (CA)
(72) Inventor: LAURIN, Larry Hermas, Bright, Ontario N0J 1B0 (CA); SARGEANT, Gavin Leigh, Bright, Ontario N0J 1B0 (CA); KUPER, Fred James, Moorefield, Ontario N0G 2K0 (CA); PIPES, George Richard, - (US); LISTON, Sergay Douglas, Salt Lake City, UT 84124 (US)
(74) Representative: Rupprecht, Kay
(86) International application number: PCT/CA2006/001972
(87) International publication number: WO 2007/065254

(56) References cited:
- EP-A- 0 268 965
- EP-A- 0 462 518
- CA-A1- 1 195 957
- CA-A1- 1 245 593
- CA-A1- 2 067 214
- CH-A- 534 624
- DE-A1- 3 003 628
- DE-A1- 4 220 116
- JP-A- 60 178 104
- JP-A- 2004 115 157
- US-A- 2 624 470
- US-A- 3 447 697
- US-A- 4 787 804
- US-A- 6 042 321

## Description

### Field of the Invention

This invention relates in general to an automated handling system and more particularly to a rack and conveyor shuttle system having a rack system adapted to retain different sized boxes of varying weight, and a conveyor shuttle system having at least two finger-like conveyors that move in between the rack system to pick and extract the various boxes.

### Background of the Invention

Material handling systems allow for various orders to be filled in warehouse environments. Depending on the warehouse and the type of goods being stored, material handling can be automated, semi-automated or manual. In general warehouses often contain a large number and a wide variety of goods which makes handling and storing these goods problematic. Typically material handling systems have attempted to track, store, and retrieve goods for customer orders in an efficient manner. Where a customer order contains various goods of different sizes and weights, the order has traditionally been filled by utilizing a multi-level rack system and manually going to each level and retrieving the specific goods. Depending on the warehouse and the goods being stored, sophisticated machinery is needed to reach the various levels of the rack system. Furthermore additional personnel are needed to not only operate the machinery but to manually retrieve the specific goods to fill the customer order.

Prior art handling systems have been devised to address the some of these noted problems. For example, United States Patent No. 6,042,321 issued on March 28, 2000 to Labell and relates to an automated storage system for receiving, storing and returning dairy cases stored without pallets. Specifically, the automated storage system comprises an article transporter which includes a shuttle that deposits and retrieves dairy cases stored in storage lanes of a storage rack and a rail system for supporting the shuttle and dairy cases stored thereon. One or more shuttles may be used in the automated storage and retrieval system and are coupled via a shuttle bridge. The rail system includes two or more outer support rails and two or more inner support rails for supporting the shuttle and dairy cases.

U.S. Patent No. 4,872,800 which issued on October 10, 1989 to Gutov relates to a unit goods storage includes racks, a frame-work of which is made up each of vertical masts giving support to stacks of cantilever shelves facing each other with their free sides so as to form vertical passages each containing a horizontal conveyor the ends of the frames of which extend beyond the framework. All ends of the frames of the conveyors are interlinked by stiff members so as to form therewith a grid work capable of displacing up and down the height of the storage under the action of a drive.

U.S. Patent No. 5,056,978 which issued on October 15, 1991 to Grafe et al. relates to a high shelf system and a conveyor arrangement including a vertical mast structure which is movable in longitudinal direction of a corridor between shelf racks. The mast structure includes load receiving members which can be aligned with the shelf compartments. The load receiving members are displaceable perpendicularly to the shelf corridor. A load receiving member is fixedly arranged on the mast structure for each shelf level. At least one loading and unloading station is provided for the conveyor arrangement for vertically moving units to be stored between a storage input and output level and the shelf compartments. Each load receiving member carries on a rigid platform a transverse conveyor device which is adjustable along the entire length of the platform and beyond each end of the platform. The transverse conveyor device includes a slide or carriage. A linear drive arranged on the platform acts on the slide. The slide has at both ends thereof locking members for the units to be stored. The locking members can be raised and lowered transversely of the direction of movement of the slide. The locking members are coupled to an adjusting drive which is mounted on the slide or to an adjusting drive which is mounted partially on the slide and partially on the platform.

A further prior art rack and conveyor shuttle system is disclosed in DE 3003628 A1.

Thus a rack and conveyor shuttle system which allows for efficiently and accurately filling of mixed pallet orders that have different sized and weighted boxes would be is desirable.

### Summary of the Invention

An object of one aspect of the present invention is to provide an improved rack and conveyor shuttle system for placing and retrieving articles of various sizes.

In accordance with one aspect of the present invention there is provided a rack and conveyor shuttle system for placing and retrieving articles of various sizes including a rack system having a shelving framework of at least two tubes spaced apart from one another at a distance, wherein the distance between the tubes is sufficient to support the article in a single stack and a motorized, conveyor shuttle system having at least two finger-like conveyors spaced apart from one another at a distance, wherein the distance between the finger-like conveyors is sufficient to move in between the two tubes so as to engage the article wherein the conveyor shuttle system is adapted to interlace in between the rack system for both placing and retrieving the article.

Each finger-like conveyer further includes a conveyor belt and a series of grooved pulleys where the grooved pulleys drive the conveyor belt and grab the article, the pulleye provided with teeth adapted to bite into the article.

Preferably, a controller is adapted to control the movement of the conveyor shuttle system and more specifically move the finger-like conveyors from side to side. Furthermore the motorized conveyor shuttle system may have two independent motors wherein the first motor powers the movement of conveyor belt and the series of grooved pulleys and the second motor powers the movement of the finger-like conveyor's movement from side to side.

Advantages of the present invention are the ability to place and retrieve different sized boxes and different weighted boxes, all placing and retrieving is automated so that manual labour is not required to be in a cold environment, placing and retrieving has increased accuracy and efficiency, reduced costs as manual labour is avoided, mixed orders of various articles in various sizes can be created and filled, and system can be implemented on a large scale such as a multi-level freezer.

### Brief Description of the Drawings

A detailed description of the preferred embodiment is provided herein below by way of example only and with reference to the following drawings, in which:
Figure 1 in a perspective view, illustrates a rack and conveyor shuttle system in accordance with the preferred embodiment of the present invention;
Figure 2 in a top plan view, illustrates the conveyor shuttle system of Figure 1.
Figure 3 in a side elevation view illustrates the conveyor shuttle system of Figure 1.
Figure 4 in a top plan view illustrates the conveyor shuttle system and the rack system of Figure 1.
Figure 5 in a side elevation view illustrates the conveyor shuttle system and the rack system of Figure 1.
Figure 6a in a side elevation view illustrates the conveyor shuttle system and its interaction with the rack system of Figure 1.
Figure 6b in a side elevation view illustrates the conveyor shuttle system and its interaction with the rack system of Figure 1.
Figure 6c in a side elevation view illustrates the conveyor shuttle system and its interaction with the rack system of Figure 1.
Figure 7 in a side elevation view illustrates the conveyor shuttle system within the rack system of Figure 1.
Figure 8 in a perspective view illustrates the rack system of Figure 1.
Figure 9a in a top plan view illustrates the rack system of Figure 1.
Figure 9b in a side elevation view illustrates the rack system of Figure 1.
Figure 10 in a front plan view illustrates the rack system of Figure 1.
Figure 11 in a front plan view illustrates the large modular system.
Figure 12 in a side elevation view illustrates the large modular system.
Figure 13a in a side elevation view illustrates the conveyor shuttle system interacting with the rack system of Figure 1.
Figure 13b in a side elevation view illustrates the conveyor shuttle system interacting with the rack system of Figure 1.
Figure 13c in a side elevation view illustrates the conveyor shuttle system interacting with the rack system of Figure 1.

In the drawings, preferred embodiments of the invention are illustrated by way of example. It is to be expressly understood that the description and drawings are only for the purpose of illustration and as an aid to understanding, and are not intended as a definition of the limits of the invention.

### Detailed Description of the Preferred Embodiment

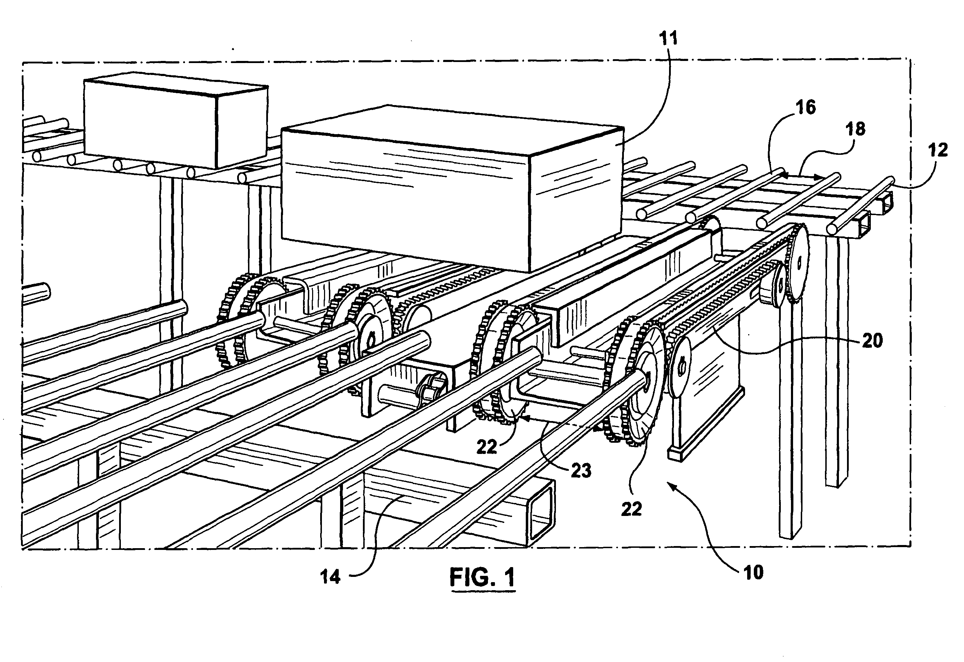

Referring to Figure 1, there is illustrated in a perspective view, a rack and conveyor shuttle system for placing and retrieving articles of various sizes in accordance with the preferred embodiment of the present invention. The rack and conveyor shuttle system 10 for placing and retrieving articles 11 of various sizes includes a rack system 12 having a shelving framework 14 of at least two tubes 16 spaced apart from one another at a distance 18. The distance 18 between the tubes 16 must be sufficient to support the article 11 in a single stack. The rack and conveyor shuttle system 10 further includes a motorized, conveyor shuttle system 20 having at least two finger-like conveyors 22 spaced apart from one another at a distance 23. The distance 23 between the finger-like conveyors 22 must be sufficient to move in between the tubes 16 so as to engage the article 11. The conveyor shuttle system 20 is adapted to interlace in between the rack system 12 for both placing and retrieving the article 11. The article 11 may be a box, by way of example having a weight range of 100 grams to 150 pounds. The box may also have a size range of 10 by 10 by 1 inch to 30 by 25 by 30 inches.

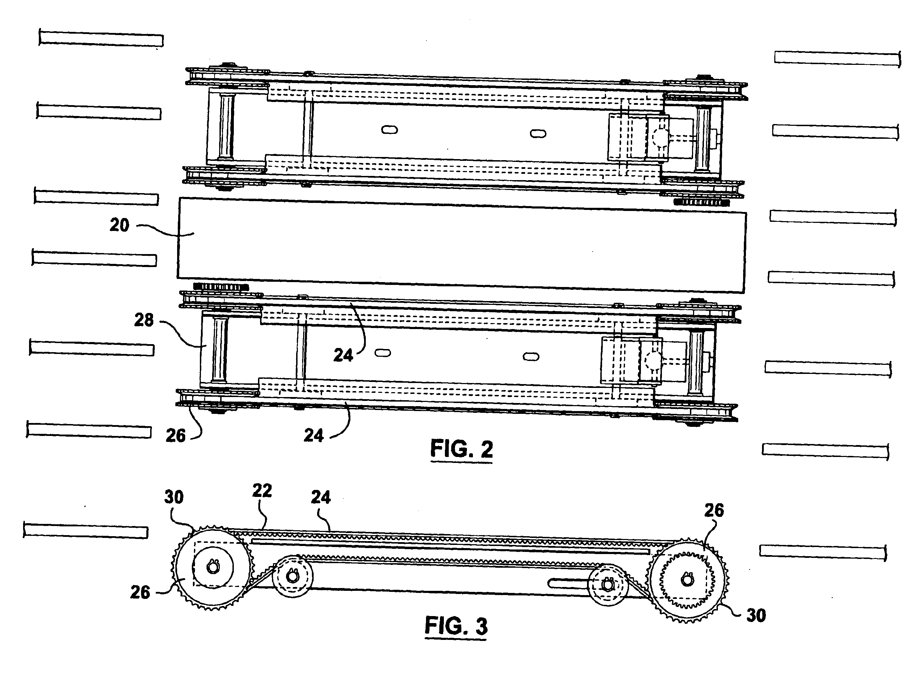

Referring to Figures 2 and 3 each finger-like conveyer 22 is further defined as having a conveyor belt 24 and a series of grooved pulleys 26. More specifically the conveyor belt 24 of each finger-like conveyor belt 22 is used to carry the article 11. Typically any article 11 being moved requires at least two conveyor belts 24 to carry the article 11. The grooved pulleys 26 not only drive the conveyor belt 24 but they also grab the article 11. Specifically the grooved pulleys 26 are positioned at the leading edge 28 of the conveyor shuttle system 20. The conveyor belt 24 is positioned around the series of pulleys 26 so that the pulleys 26 drive the conveyor belt 24 when the conveyor shuttle system 20 is activated. The positioning of the grooved pulleys 26 at the leading edge 28 of the conveyor shuttle system 20 furthermore allows the grooved pulleys 26 to grab the article 11 when the conveyor shuttle system 20 is either placing or retrieving the article 11. More specifically the grooved pulleys 26 may be defined as having teeth 30 that bite into the article 11 for example a box so that the article 11 is grabbed by the teeth 30 and moved onto the conveyor belt 24 without slipping.

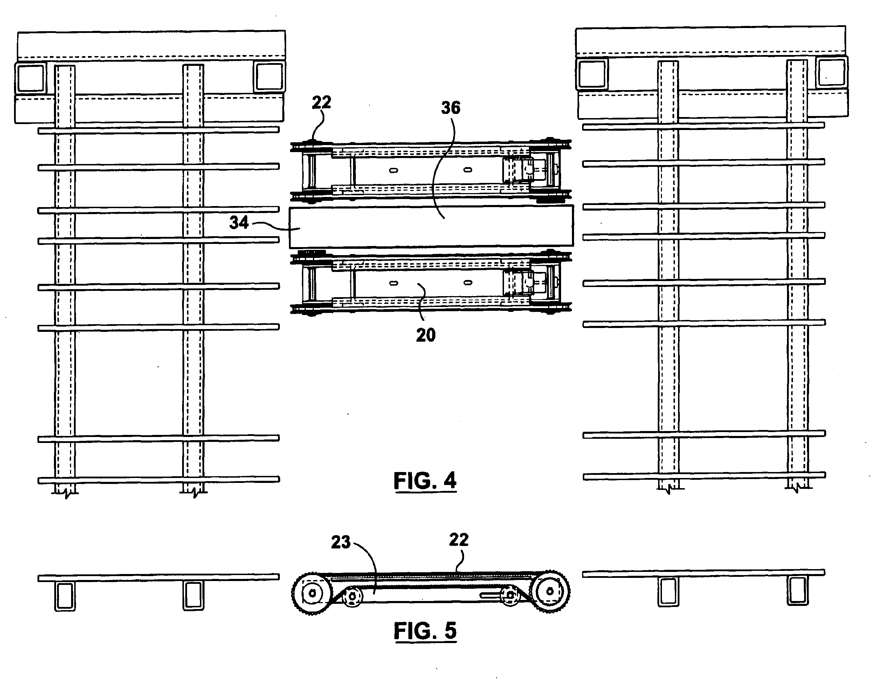

Referring to Figures 4 and 5 the conveyor shuttle system 20 further includes a controller 32 adapted to control the movement of the conveyor shuttle system 20. Specifically the controller 32 may be further defined as a programmable logic controller 34 that coordinates a variety of elements outlined below including the movement of the conveyor shuttle system 20. Generally the controller 32 moves the finger-like conveyors 22 from side to side and more specifically controls the movement in directions such as place right, retrieve right, place left or retrieve left.

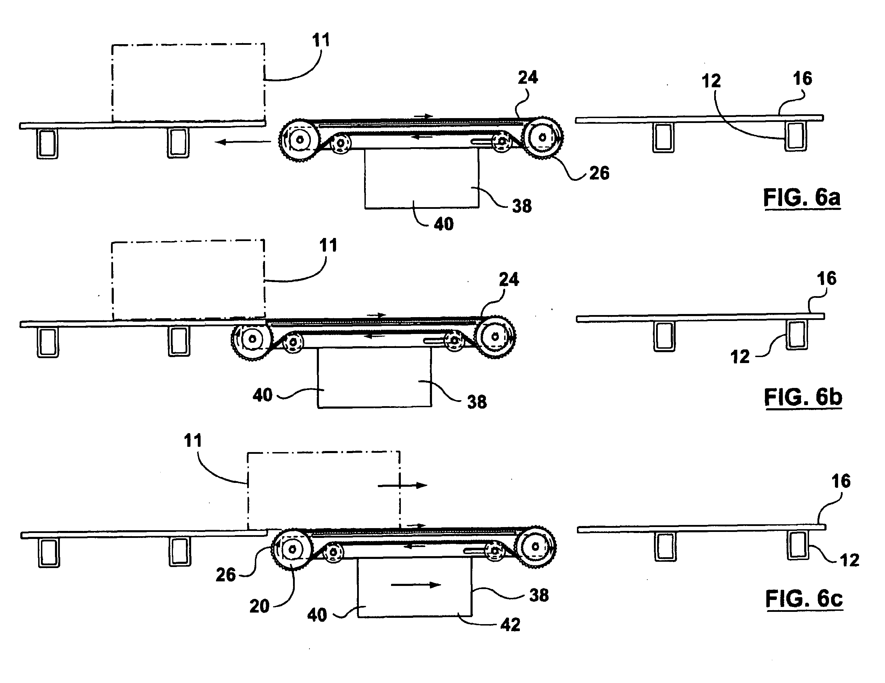

Referring to Figures 6a-c the controller 32 along with a computer management system 36 coordinates the movement of the motorized conveyor shuttle system 20. Specifically the motorized conveyor shuttle system 20 includes two independent motors 38 and 40 respectively. The first motor 38 powers the movement of the conveyor belt 24 and the series of grooved pulleys 26 and the second motor 40 powers the movement of the finger-like conveyor's 22 movement from side to side to place and retrieve the article 11. Furthermore the controller 32 and the computer management system 36 coordinate the speed of the conveyor belt 24 and the movement of the conveyor shuttle system 20 so as to accurately position the article 11 I on the rack system 12. Specifically when the conveyor shuttle system 20 is placing the article 11, the conveyor belts 24 must move or shift in a direction to place the article 11 on the tubes 16. The conveyor belts 24 must stop at the correct position to ensure the article 11 is securely and correctly placed on the tubes 16. Once the article 11 is positioned correctly, the conveyor belts 24 must move or shift in sequence to allow the article 11 to remain in exactly the same position on the tubes 16 while the conveyor shuttle system 20 retracts.

When retrieving the article 11 the conveyor belts 24 move of shift in a side sequence so that the series of grooved pulleys 26 walk under the article 11 and grab the article 11. This movement ensures that the conveyor shuttle system 20 does not push the article further onto the tubes 16. Once the conveyor belts 24 have engaged the article 11, the conveyor belts 24 reverse their direction and bring the article 11 as the same time as the conveyor shuttle system 20 retracts.

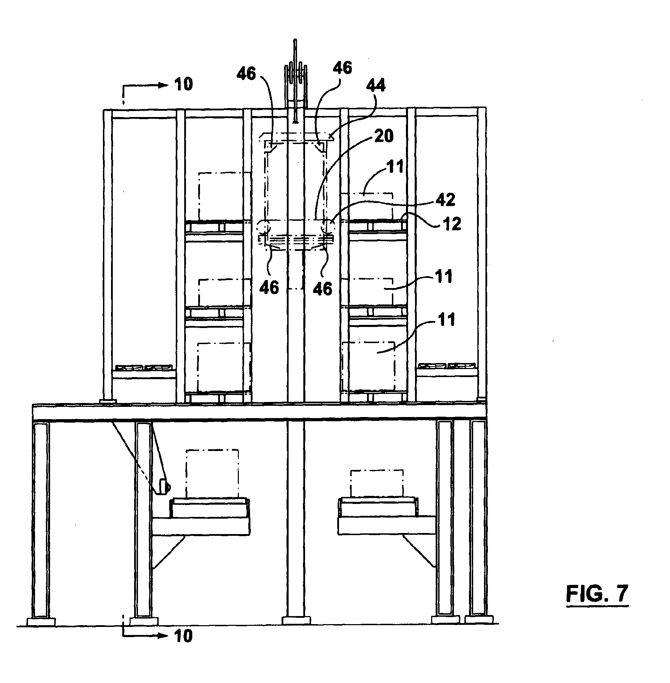

Referring to Figure 7 the conveyor shuttle system 20 further includes a linear transducer 42 that interacts with the controller 32 and the computer management system 36 for indicating the positioning of the finger-like conveyors 22 relative to the rack system 12. More specifically the linear transducer 42 communicates with the computer management system 36 the exact location of the conveyor shuttle system 20 and its related movement. This allows for the conveyor shuttle system 20 to be positioned or interlaced accurately into the rack system 12 at the correct distance when the conveyor shuttle system 20 is retrieving or placing an article from the rack system 12, and also communicates to the computer management system 36 when the conveyor shuttle system 20 has retracted from the rack system 12.

The conveyor shuttle system 20 further includes a positioning system 44 that aids in correctly positioning the article 11 of the rack system 12 during its placing and retrieving. More specifically the positioning system 44 is a series of photo eyes 46 positioned above and below the finger-like conveyors 22. The photo eyes 46 interact and identify to the controller 32 and the computer management system 36 when the article 11 has cleared the rack system 12 or the conveyor shuttle system 20. The photo eyes 46 therefore provide the exact status and or location of the article 11 and the conveyor shuttle system 20 at all times.

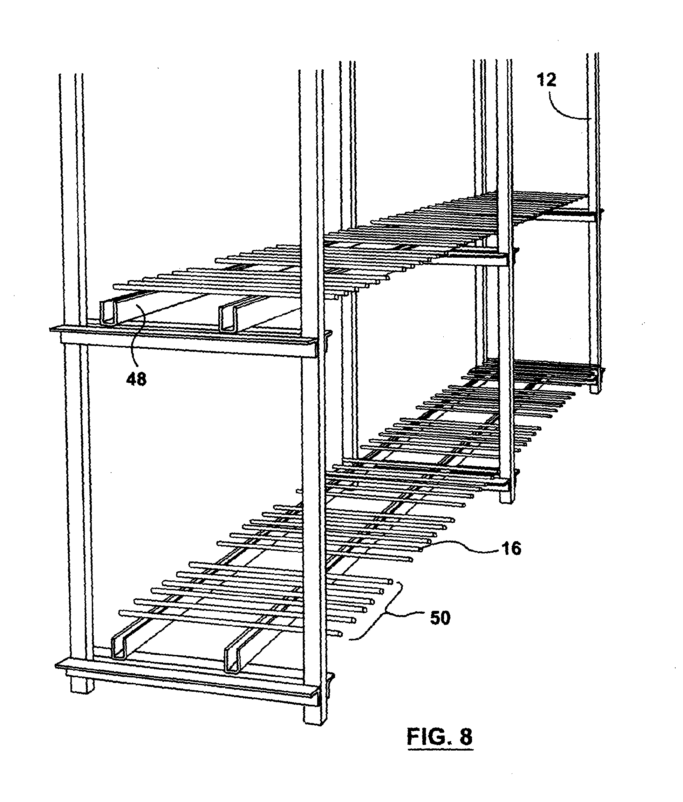

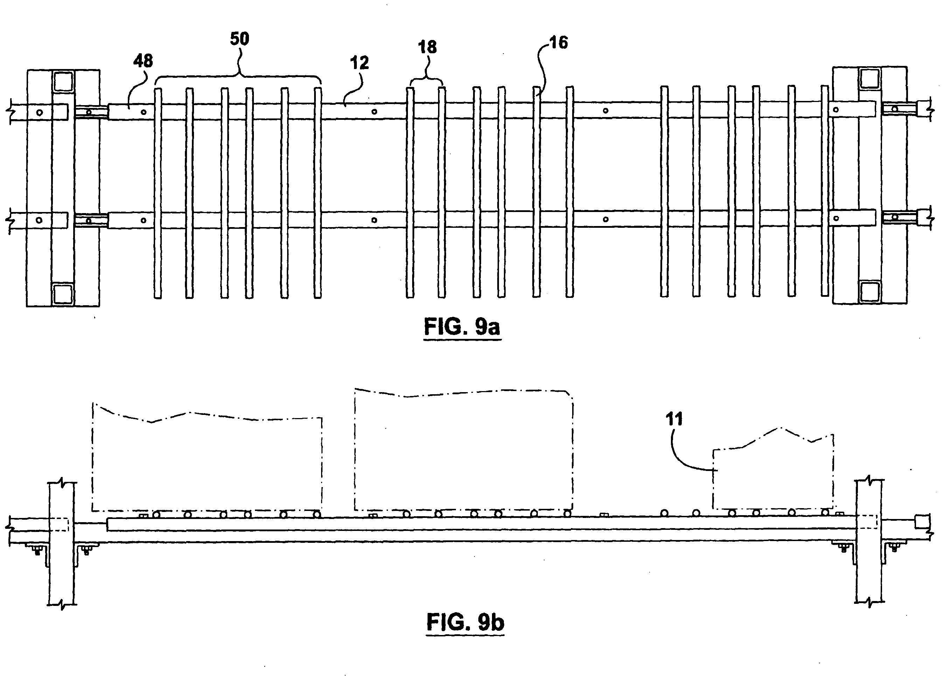

Referring to Figures 8 and 9 the rack system 12 may be further defined where the shelving framework 14 is 3% inch tubing 16 positioned perpendicular to crossmembers 48. The article 11 is supported by a minimum of two tubes 16, the tubes 16 therefore acting as a shelf. In general the shelving framework 14 is a series of rack sections 50 wherein one rack section 50 accommodates one article 11. Typically four tubes make up one rack section 50 to support one article 11. The tubes 16 are spaced apart from one another at sufficient distance 18 to ensure that the size of article 11 is completely supported by the rack section 50 and therefore the article 11 will not slip through the distance 18 between the tubes 16. The distance 18 between the tubes 16 is also important to allow for the finger-like conveyors 22 to interlace or go between the tubes 16 without interfering with the tubes 16 therefore allowing the finger-like conveyors 22 to pick up or grab the article 11 in an accurate manner. The rack sections 50 are organized to allow for the single stacking of the articles 11. Therefore each rack section 50 supports a single article 11 on one level, with no double stacking of the article 11.

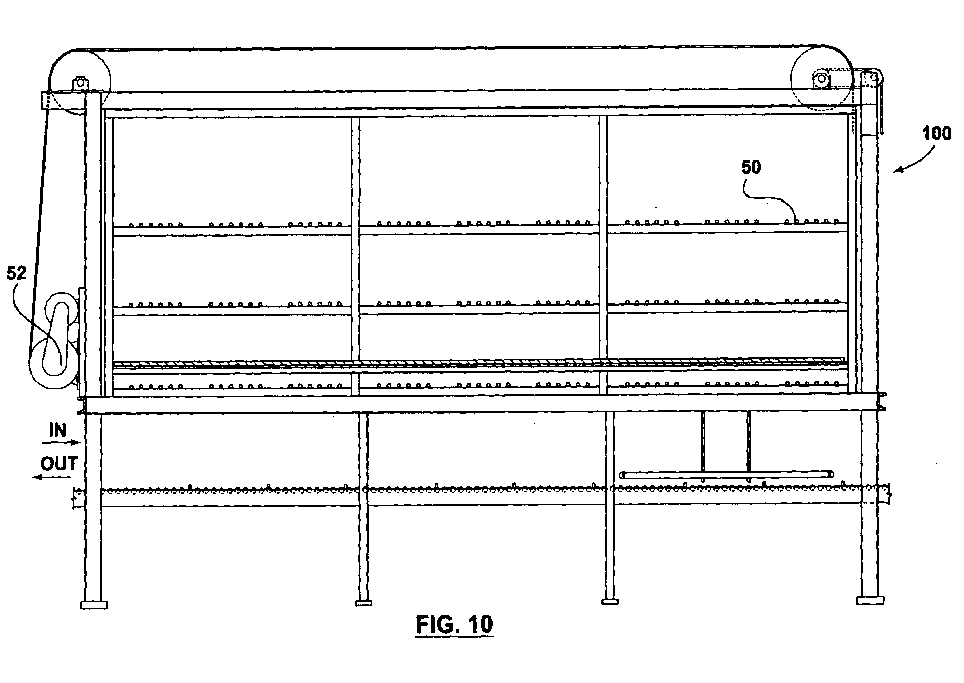

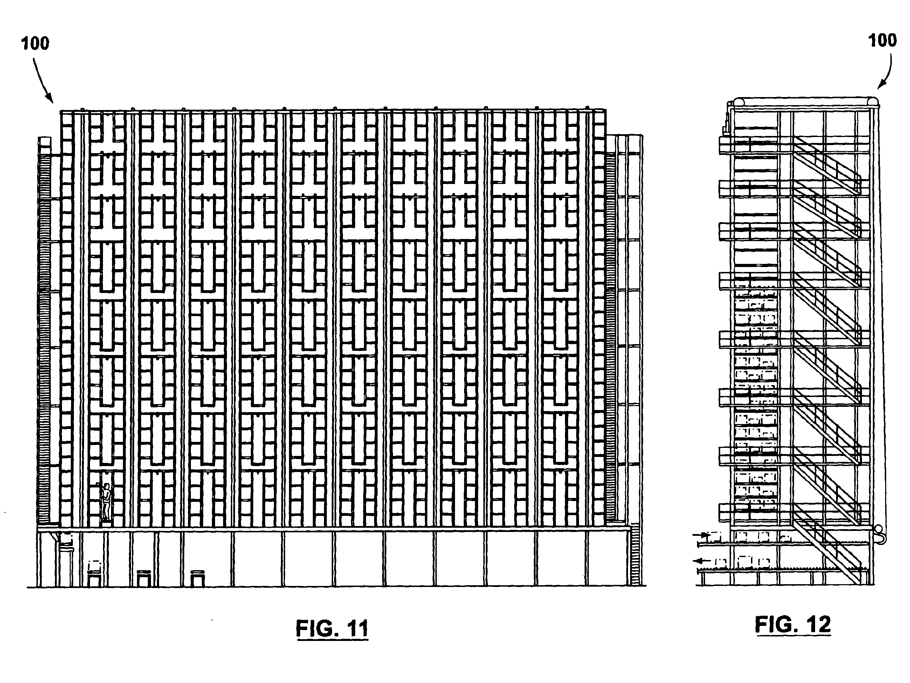

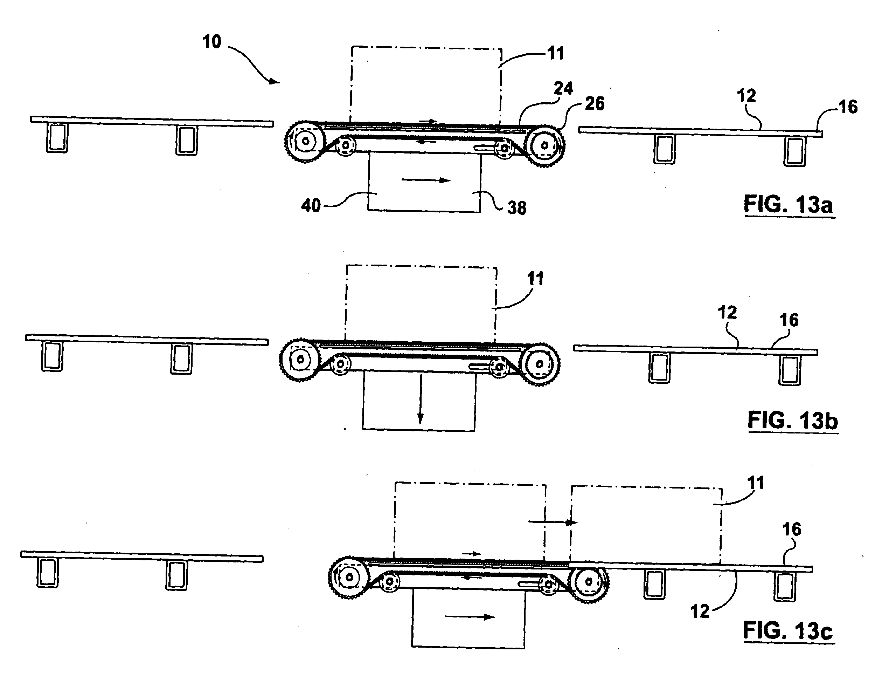

Referring to Figures 10-13c the rack and conveyor shuttle system 10 for placing and retrieving articles of various sizes may be implemented on a large scale in a large modular system 100. Specifically the rack and conveyor shuttle system 10 may be implemented in a multi-level freezer or cold-storage building. Specifically the motorized, conveyor shuttle system 20 can include nine groups of four finger-like conveyors 22 mounted on a movable member 52. The movable member 52 may be further defined as a load beam that is positioned adjacent the rack system 12. The movable member 52 therefore allows the groups of finger-like conveyors 22 to interlace with the rack system 12. The movable member 52 or load beam moves in a vertical direction up and down the height of the large modular system 100. More specifically the modular system 100 may be up to thirty-five levels high therefore allowing for up to thirty-five levels of shelving framework 14. Depending on the size of the modular system 100 there may be over twenty movable members 52 each with nine groups of four finger-like conveyors 22 servicing over thirteen thousand individual rack sections 50.

In operation, the rack and conveyor shuttle system 10 is incorporated into a large modular system 100. Typically full pallets of articles 11 or boxes are presented to a de-palletiser. The required amount of articles 11 are removed and placed on a section of an input conveyor. The input conveyor subsequently distributes the articles 11 to the motorized conveyor shuttle system 20. Through a coordinated computer system the movable member 52 moves up and down the large modular system 100 storing the articles 11 in pre-determined rack sections 50. Upon an order request, the movable member 52 moves to the appropriate level of the large modular system 100 and the conveyor shuttle system 20 is activated via the controller 32 and retrieves or picks the desired article 11. Once the order is complete with a variety of different sized articles 11, the movable member 52 returns to the ground level, where the articles 11 are unloaded by an output conveyor.

The conveyor shuttle system 20 will place and retrieve articles throughout the modular system 100, making up multi product orders, and presenting them to the output conveyor section which takes the product to a pallet, where it is handled by an operator. The placing and retrieving operation may occur simultaneously allowing for a cost effective and efficient system

Other variations and modifications of the invention are possible. All such modifications or variations are believed to be within the sphere and scope of the invention as defined by the claims appended hereto.

## Claims

1. A rack and conveyor shuttle system (10) for placing and retrieving articles (11) of various sizes comprising:
(a) a rack system (10) having a shelving framework (14) of at least two tubes (16) spaced apart from one another at a distance (18), wherein the distance between the tubes (16) is sufficient to support the article in a single stack;
and
(b) a motorized, conveyor shuttle system (20) having at least two finger-like conveyors (22) spaced apart from one another at a distance (23), wherein the distance (23) between the finger-like conveyors (22) is sufficient to move in between the two tubes (16) so as to engage the article (11);
wherein the conveyor shuttle system (20) is adapted to interlace in between the rack system (12) for both placing and retrieving the article (11);
wherein each finger-like conveyor (22) further comprises a conveyor belt (24) and a series of grooved pulleys (26) wherein the grooved pulleys (26) drive the conveyor belt (24) and grab the article (11);
**characterized in that**
each grooved pulley (26) is a teethed pulley, the teeth (30) being adapted to bite into the article (11) so that the article (11) is grabbed by the teeth (30).

2. A rack and conveyor shuttle system (10) as claimed in claim 1, further comprising a controller (32) adapted to control the movement of the conveyor shuttle system (20).

3. A rack and conveyor shuttle system (10) as claimed in claim 2 wherein the controller (32) moves the finger-like conveyors (22) from side to side.

4. A rack and conveyor shuttle system (10) as claimed in claim 1, the finger-like conveyors (22) move in directions place right, retrieve right, place left or retrieve left.

5. A rack and conveyor shuttle system (10) as claimed in claim 2, wherein the controller (32) further comprises a computer management system (36).

6. A rack and conveyor shuttle system (10) as claimed in claim 5, wherein the motorized conveyor shuttle system (20) had two independent motors (38, 40) wherein the first motor (38) powers the movement of conveyor belt (24) and the series of grooved pulleys (26) and the second motor (40) powers the movement of the finger-like conveyor's (22) movement from side to side.

7. A rack and conveyor shuttle system (10) as claimed in claim 5, wherein the controller (32) and computer system (36) coordinate the speed of the conveyor belt (24) and the movement of the conveyor shuttle system (20) to position the article (11) on the rack system (12).

8. A rack and conveyor shuttle system (10) as claimed in claim 5, wherein the conveyor shuttle system (20) further comprises a linear transducer (42) for indicating the positioning of the finger-like conveyors (22) relative to the rack system (12).

9. A rack and conveyor shuttle system (10) as claimed in claim 5, wherein the conveyor shuttle system (20) further comprises a positioning system (44) so as to correctly position the article (11) during placing and retrieving.

10. A rack and conveyor shuttle system (10) as claimed in claim 9, wherein the positioning system (44) is a series of photo eyes (46) positioned above and below the finger-like conveyors (22).

11. A rack and conveyor shuttle system (10) as claimed in claim 1, wherein the article (11) is a box having a weight range of 100 grams to 150 pounds.

12. A rack and conveyor shuttle system (10) as claimed in claim 1, wherein the article (11) is a box having a size range of 10 by 10 by 1 inch to 30 by 25 by 30 inches.

13. A rack and conveyor shuttle system (10) as claimed in claim 1, wherein the shelving framework (14) is ¼ inch tubing positioned perpendicular to crossmembers (48) wherein the article (11) is supported by a minimum of two tubes (16).

14. A rack and conveyor shuttle system (10) as claimed in claim 1, wherein the shelving framework (14) is a series of rack sections (50) wherein one rack section (50) accommodates one article (11).

15. A rack and conveyor shuttle system (10) as claimed in claim 1, wherein four tubes (16) support one article (11).

16. A rack and conveyor shuttle system (10) as claimed in claim 1, wherein the rack system (12) has up to thirty-five levels of shelving framework (14).

17. A rack and conveyor shuttle system (10) as claimed in claim 1, wherein the motorized, conveyor shuttle system (20) has nine groups of four finger-like conveyors (22) mounted on a movable member (52).

18. A rack and conveyor shuttle system (10) as claimed in claim 17, wherein the movable member (52) is positioned adjacent the rack system (12) allowing the groups of finger-like conveyors (22) to interlace with the rack system (12) and move between the levels of shelving framework (14).

## Patentansprüche

1. Gestell- und Förderschlittensystem (10) zum Ablegen und Wiedererlangen von Gegenständen (11) mit verschiedenen Größen, das enthält:
(a) ein Gestellsystem (10) mit einem Regalgerüst (14) aus mindestens zwei Rohren (16), die in einem Abstand (18) voneinander beabstandet sind, wobei der Abstand zwischen den Rohren (16) ausreicht, um den Gegenstand in einem einzelnen Stapel abzustützen; und
(b) ein motorisiertes Förderschlittensystem (20) mit mindestens zwei fingerartigen Fördereinrichtungen (22), die in einem Abstand (23) voneinander beabstandet sind, wobei der Abstand (23) zwischen den fingerartigen Fördereinrichtungen (22) ausreicht, damit sie sich zwischen den zwei Rohren (16) bewegen, um an dem Gegenstand (11) anzugreifen;
wobei das Förderschlittensystem (20) so ausgelegt ist, dass es zwischen das Gestellsystem (12) eingeschachtelt ist, um den Gegenstand (11) sowohl abzulegen als auch wiederzuerlangen;
wobei jede fingerartige Fördereinrichtung (22) ferner ein Förderband (24) und eine Reihe von mit Nut versehenen Riemenscheiben (26) enthält, wobei die mit Nut versehenen Riemenscheiben (26) das Förderband (24) antreiben und den Gegenstand (11) ergreifen;
**dadurch gekennzeichnet, dass**
jede mit Nut versehene Riemenscheibe (26) eine Zahnriemenscheibe ist, wobei die Zähne (30) dazu ausgelegt sind, in den Gegenstand (11) zu greifen, so dass der Gegenstand (11) durch die Zähne (30) ergriffen wird.

2. Gestell- und Förderschlittensystem (10) nach Anspruch 1, das ferner eine Steuereinheit (32) enthält, die dazu ausgelegt ist, die Bewegung des Förderschlittensystems (20) zu steuern.

3. Gestell- und Förderschlittensystem (10) nach Anspruch 2, wobei die Steuereinheit (32) die fingerartigen Fördereinrichtungen (22) von Seite zu Seite bewegt.

4. Gestell- und Förderschlittensystem (10) nach Anspruch 1, wobei sich die fingerartigen Fördereinrichtungen (22) in den Richtungen rechts ablegen, rechts wiedererlangen, links ablegen oder links wiedererlangen bewegen.

5. Gestell- und Förderschlittensystem (10) nach Anspruch 2, wobei die Steuereinheit (32) ferner ein Computermanagementsystem (36) enthält.

6. Gestell- und Förderschlittensystem (10) nach Anspruch 5, wobei das motorisierte Förderschlittensystem (20) zwei unabhängige Motoren (38, 40) enthält, wobei der erste Motor (38) die Bewegung des Förderbandes (24) und der Reihe von mit Nut versehenen Riemenscheiben (26) antreibt und der zweite Motor (40) die Bewegung der fingerartigen Fördereinrichtungen (22) von Seite zu Seite antreibt.

7. Gestell- und Förderschlittensystem (10) nach Anspruch 5, wobei die Steuereinheit (32) und das Computersystem (36) die Geschwindigkeit des Förderbandes (24) und die Bewegung des Förderschlittensystems (20) koordinieren, um den Gegenstand (11) auf dem Gestellsystem (12) zu positionieren.

8. Gestell- und Förderschlittensystem (10) nach Anspruch 5, wobei das Förderschlittensystem (20) ferner einen linearen Wandler (42) zum Angeben der Positionierung der fingerartigen Fördereinrichtungen (22) relativ zum Gestellsystem (12) enthält.

9. Gestell- und Förderschlittensystem (10) nach Anspruch 5, wobei das Förderschlittensystem (20) ferner ein Positionierungssystem (44) enthält, um den Gegenstand (11) während des Ablegens und des Wiedererlangens korrekt zu positionieren.

10. Gestell- und Förderschlittensystem (10) nach Anspruch 9, wobei das Positionierungssystem (44) eine Reihe von Photozellen (46) ist, die über und unter den fingerartigen Fördereinrichtungen (22) angeordnet sind.

11. Gestell- und Förderschlittensystem (10) nach Anspruch 1, wobei der Gegenstand (11) ein Kasten mit einem Gewichtsbereich von 100 Gramm bis 150 Pfund ist.

12. Gestell- und Förderschlittensystem (10) nach Anspruch 1, wobei der Gegenstand (11) ein Kasten mit einem Größenbereich von 10 mal 10 mal 1 Zoll bis 30 mal 25 mal 30 Zoll ist.

13. Gestell- und Förderschlittensystem (10) nach Anspruch 1, wobei das Regalgerüst (14) eine Verrohrung mit ¼ Zoll ist, die senkrecht zu Querelementen (48) angeordnet ist, wobei der Gegenstand (11) durch ein Minimum von zwei Rohren (16) abgestützt wird.

14. Gestell- und Förderschlittensystem (10) nach Anspruch 1, wobei das Regalgerüst (14) eine Reihe von Gestellabschnitten (50) ist, wobei ein Gestellabschnitt (50) einen Gegenstand (11) aufnimmt.

15. Gestell- und Förderschlittensystem (10) nach Anspruch 1, wobei vier Rohre (16) einen Gegenstand (11) abstützen.

16. Gestell- und Förderschlittensystem (10) nach Anspruch 1, wobei das Gestellsystem (12) bis zu fünfunddreißig Ebenen des Regalgerüsts (14) enthält.

17. Gestell- und Förderschlittensystem (10) nach Anspruch 1, wobei das motorisierte Förderschlittensystem (20) neun Gruppen von vier fingerartigen Fördereinrichtungen (22) enthält, die an einem beweglichen Element (52) angebracht sind.

18. Gestell- und Förderschlittensystem (10) nach Anspruch 17, wobei das bewegliche Element (52) benachbart zum Gestellsystem (12) angeordnet ist, was ermöglicht, dass die Gruppen von fingerartigen Fördereinrichtungen (22) mit dem Gestellsystem (12) verschachteln und sich zwischen den Ebenen des Regalgerüsts (14) bewegen.

## Revendications

1. Système (10) à étagère et navette de transport, pour placer et récupérer des articles (11) de diverses dimensions, comprenant :
(a) un système d'étagère (10) comportant une charpente de rayonnage (14) faite d'au moins deux tubes (16) séparés l'un de l'autre d'une distance (18), dans lequel la distance entre les tubes (16) est suffisante pour supporter l'article en une seule pile ; et
(b) un système de navette de transport (20) motorisé comportant au moins deux transporteurs (22) en forme de doigt séparés l'un de l'autre d'une distance (23), dans lequel la distance (23) entre les transporteurs (22) en forme de doigt est suffisante pour qu'ils s'avancent entre les deux tubes (16) afin d'engager l'article (11) ;
dans lequel le système de navette de transport (20) est apte à s'entrecroiser entre les éléments du système d'étagère (12) pour à la fois placer et récupérer l'article (11) ; dans lequel chaque transporteur (22) en forme de doigt comprend en outre une courroie transporteuse (24) et une série de poulies à gorge (26), dans lequel les poulies à gorge (26) entraînent la courroie transporteuse (24) et saisissent l'article (11) ;
**caractérisé en ce que**
chaque poulie à gorge (26) est une poulie crantée, les dents (30) étant aptes à mordre dans l'article (11) de façon à ce que l'article (11) soit saisi par les dents (30).

2. Système (10) à étagère et navette de transport selon la revendication 1, comprenant en outre un dispositif de commande (32) apte à commander le mouvement du système de navette de transport (20).

3. Système (10) à étagère et navette de transport selon la revendication 2, dans lequel le dispositif de commande (32) déplace d'un côté à l'autre les transporteurs (22) en forme de doigt.

4. Système (10) à étagère et navette de transport selon la revendication 1, dans lequel les transporteurs (22) en forme de doigt se déplacent dans les sens place à droite, récupère à droite, place à gauche ou récupère à gauche.

5. Système (10) à étagère et navette de transport selon la revendication 2, dans lequel le dispositif de commande (32) comprend en outre un système de gestion par ordinateur (36).

6. Système (10) à étagère et navette de transport selon la revendication 5, dans lequel le système de navette de transport (20) motorisé comporte deux moteurs électriques (38, 40) indépendants, le premier moteur (38) faisant marcher les courroies transporteuses (24) et le second moteur (40) faisant fonctionner le mouvement d'un côté à l'autre des transporteurs (22) en forme de doigt.

7. Système (10) à étagère et navette de transport selon la revendication 5, dans lequel le dispositif de commande (32) et le système de gestion par ordinateur (36) coordonnent la vitesse des courroies transporteuses (24) et le mouvement du système de navette de transport (20) pour placer l'article (11) sur le système d'étagère (12).

8. Système (10) à étagère et navette de transport selon la revendication 5, dans lequel le système de navette de transport (20) comprend en outre un transducteur linéaire (42) pour indiquer la position des transporteurs (22) en forme de doigt par rapport au système d'étagère (12).

9. Système (10) à étagère et navette de transport selon la revendication 5, dans lequel le système de navette de transport (20) comprend en outre un système de mise en place (44) afin de disposer correctement l'article (11) pendant le rangement et la récupération.

10. Système (10) à étagère et navette de transport selon la revendication 9, dans lequel le système de mise en place (44) est constitué d'une série de cellules photoélectriques (46) placées au dessus et au dessous des transporteurs (22) en forme de doigt.

11. Système (10) à étagère et navette de transport selon la revendication 1, dans lequel l'article (11) est un carton dont le poids s'échelonne entre 100 grammes et 68 kilogrammes.

12. Système (10) à étagère et navette de transport selon la revendication 1, dans lequel l'article (11) est un carton dont les dimensions vont de 25 x 25 x 2,5 cm à 76 x 64 x 76 cm.

13. Système (10) à étagère et navette de transport selon la revendication 1, dans lequel la charpente de rayonnage (14) est en tube de 6 mm placé perpendiculairement aux traverses (48), l'article (11) étant supporté par au moins deux tubes (16).

14. Système (10) à étagère et navette de transport selon la revendication 1, dans lequel la charpente de rayonnage (14) est une série de sections (50) d'étagère, chaque section (50) d'étagère pouvant recevoir un article (11).

15. Système (10) à étagère et navette de transport selon la revendication 1, dans lequel l'article (11) s'appuie sur quatre tubes (16).

16. Système (10) à étagère et navette de transport selon la revendication 1, dans lequel le système d'étagère (12) comporte jusqu'à trente-cinq niveaux de charpente de rayonnage (14).

17. Système (10) à étagère et navette de transport selon la revendication 1, dans lequel le système de navette de transport (20) motorisé comporte neuf groupes de quatre transporteurs (22) en forme de doigt montés sur un élément mobile (52).

18. Système (10) à étagère et navette de transport selon la revendication 17, dans lequel l'élément mobile (52) est placé tout à côté du système d'étagère (12), permettant aux groupes de transporteurs (22) en forme de doigt de s'entrecroiser avec le système d'étagère (12) et de se déplacer entre les niveaux de charpente de rayonnage (14).
